# EUROPEAN PATENT APPLICATION

(11) **EP 4 611 406 A1**
(43) Date of publication of application: **03.09.2025**
(21) Application number: 22965595.6
(22) Date of filing: 18.11.2022
(51) Int. Cl.: H04W 4/40, H04M 1/725

(54) **VEHICLE UNLOCKING METHOD AND DIGITAL KEY**

(71) Applicant: Shenzhen Yinwang Intelligent Technologies Co., Ltd., Shenzhen, Guangdong 518129 (CN)
(72) Inventor: ZHANG, Wei, Shenzhen, Guangdong 518129 (CN); PEI, Yan, Shenzhen, Guangdong 518129 (CN); LI, Yuxiang, Shenzhen, Guangdong 518129 (CN)
(74) Representative: Körber, Martin Hans
(86) International application number: PCT/CN2022/133022
(87) International publication number: WO 2024/103416

(57) **Abstract**

This application provides a vehicle unlocking method and a digital key. The vehicle unlocking method includes: An extension device receives a first instruction from a carrier device of the digital key based on a first communication protocol; and the extension device communicates with a vehicle based on a second communication protocol in response to the first instruction. According to the technical solutions provided in this application, when the carrier device of the digital key does not support a wireless communication technology used by the vehicle, a digital key function may also be implemented for the vehicle.

## Description

### TECHNICAL FIELD

This application relates to the field of vehicle technologies, and in particular, to a vehicle unlocking method and a digital key.

### BACKGROUND

With continuous development of vehicles, vehicle keys have evolved from physical vehicle keys to current digital keys. A digital key provides a function that enables an intelligent terminal to have a "vehicle key" through a wireless communication technology (the intelligent terminal may be considered as a vehicle key), so that a user can control a vehicle without relying on a physical vehicle key.

Wireless communication technologies supported by vehicles include Bluetooth low energy (Bluetooth low energy, BLE), near field communication (near field communication, NFC), ultra-wideband (ultra-wideband, UWB), and low frequency (low frequency, LF)+radio frequency (radio frequency, RF).

However, most current intelligent terminals support only wireless communication technologies such as Bluetooth low energy (Bluetooth low energy, BLE) and near field communication (near field communication, NFC). As a result, a digital key function currently cannot be provided for a vehicle that uses a communication technology other than BLE and NFC.

### SUMMARY

This application provides a vehicle unlocking method and a digital key, to implement a digital key function for a vehicle when an intelligent terminal does not support a wireless communication technology used by the vehicle.

According to a first aspect, this application provides a vehicle unlocking method, applied to a digital key. The method includes: An extension device of the digital key receives a first instruction from a carrier device of the digital key based on a first communication protocol; and the extension device communicates with a vehicle based on a second communication protocol in response to the first instruction.

Specifically, in this application, the carrier device of the digital key is a device that supports the first communication protocol but does not support the second communication protocol. The vehicle is a device that supports the second communication protocol. The extension device is a device that supports both the first communication protocol and the second communication protocol.

Generally, the carrier device of the digital key is also referred to as a key carrier device.

In this application, when the extension device is used, if the key carrier device that does not support the second communication protocol needs to implement the digital key function for the vehicle that supports the second communication protocol, that is, if the key carrier device that does not support the second communication protocol needs to enable, by using the second communication protocol, the vehicle to perform some operations, the key carrier device may send an operation instruction (which is also referred to as a first instruction) to the extension device based on the first communication protocol. Then, the extension device may receive, by using the first communication unit, the operation instruction sent by the key carrier device based on the first communication protocol, and in response to the operation instruction, communicate with the vehicle based on the second communication protocol by using the second communication unit, to implement a target operation on the vehicle, in other words, the digital key function is provided for the vehicle that supports the second communication protocol.

With reference to the first aspect, in a possible implementation, the second communication protocol is a wireless communication protocol used for ranging.

For example, the wireless communication protocol used for ranging is the UWB ranging protocol.

With reference to the first aspect, in a possible implementation, the first instruction instructs the extension device to perform ranging interaction with the vehicle. That the extension device communicates with a vehicle based on a second communication protocol in response to the first instruction includes: The extension device performs ranging interaction with the vehicle based on the second communication protocol in response to the first instruction.

In this implementation, because the key carrier device does not support a wireless communication protocol used for ranging, the key carrier device cannot implement a ranging function with the vehicle. However, the key carrier device sends, to the extension device, an instruction for enabling the ranging function, so that the extension device completes the ranging function with the vehicle. In this way, the digital key function is provided for the vehicle that supports the wireless communication protocol used for ranging.

With reference to the first aspect, in a possible implementation, the first instruction is a remote control instruction of the vehicle, and the first instruction carries key information of the vehicle. That the extension device communicates with a vehicle based on a second communication protocol in response to the first instruction includes: The extension device sends the first instruction to the vehicle based on the second communication protocol in response to the first instruction.

In this implementation, because the key carrier device does not support a radio frequency protocol, the key carrier device cannot directly provide the digital key function for the vehicle. However, the key carrier device sends the remote control instruction to the extension device, so that the extension device sends the remote control instruction to the vehicle based on the radio frequency protocol. In this way, the digital key function is provided for the vehicle that supports the radio frequency protocol.

For example, the second communication protocol is a radio frequency protocol.

With reference to the first aspect, in a possible implementation, the method further includes: The extension device sends first information to the carrier device based on the first communication protocol before receiving the first instruction. The first information indicates that a connection is established between the extension device and the carrier device.

In this implementation, the extension device sends the first information to the carrier device of the digital key by using the first communication unit, so that the carrier device of the digital key can learn that the current extension device can receive the instruction sent by using the first communication protocol.

With reference to the first aspect, in a possible implementation, the method further includes: The extension device obtains electric energy from the carrier device; and the extension device starts the extension device based on the electric energy.

For example, the extension device obtains the electric energy from the carrier device in at least one of the following manners: a wired manner, a wireless manner, and a metal contact manner.

With reference to the first aspect, in a possible implementation, the first communication protocol is the Bluetooth low energy protocol.

With reference to the first aspect, in a possible implementation, the carrier device includes a mobile phone or a wearable device.

According to a second aspect, this application provides a vehicle unlocking method, applied to a vehicle, and including: communicating with an extension device of a digital key based on a second communication protocol. The extension device receives a first instruction from a carrier device of the digital key based on a first communication protocol, and communicates with the vehicle based on the second communication protocol in response to the first instruction.

With reference to the second aspect, in a possible implementation, the second communication protocol is a wireless communication protocol used for ranging.

With reference to the second aspect, in a possible implementation, the first instruction instructs the extension device to perform ranging interaction with the vehicle. The communicating with an extension device based on a second communication protocol includes: performing ranging interaction with the extension device based on the second communication protocol.

With reference to the second aspect, in a possible implementation, the second communication protocol is the ultra-wideband UWB protocol.

With reference to the second aspect, in a possible implementation, the first instruction is a remote control instruction of the vehicle, and the first instruction carries key information of the vehicle. The communicating with an extension device based on a second communication protocol includes: The vehicle receives, based on the second communication protocol, the first instruction sent by the extension device; and performs an operation indicated by the first instruction.

With reference to the second aspect, in a possible implementation, the second communication protocol is a radio frequency protocol.

According to a third aspect, this application provides a digital key. The digital key includes an extension device and a carrier device of the digital key. The extension device includes a first communication unit and a second communication unit. The first communication unit is configured to receive a first instruction from the carrier device of the digital key based on a first communication protocol. The second communication unit is configured to communicate with a vehicle based on a second communication protocol in response to the first instruction.

With reference to the third aspect, in a possible implementation, the second communication protocol is a wireless communication protocol used for ranging.

For example, the wireless communication protocol used for ranging is the UWB ranging protocol.

With reference to the third aspect, in a possible implementation, the first instruction instructs the extension device to perform ranging interaction with the vehicle. The second communication unit is specifically configured to perform ranging interaction with the vehicle based on the second communication protocol in response to the first instruction.

With reference to the third aspect, in a possible implementation, the first instruction is a remote control instruction of the vehicle, and the first instruction carries key information of the vehicle. The second communication unit is specifically configured to send the first instruction to the vehicle based on the second communication protocol in response to the first instruction.

With reference to the third aspect, in a possible implementation, the first communication unit is further configured to send first information to the carrier device based on the first communication protocol before receiving the first instruction. The first information indicates that a connection is established between the extension device and the carrier device.

With reference to the third aspect, in a possible implementation, the extension device further includes a power supply unit. The power supply unit is configured to obtain electric energy from the carrier device to start the extension device.

For example, the power supply unit specifically obtains the electric energy from the carrier device in at least one of the following manners: a wired manner, a wireless manner, and a metal contact manner.

With reference to the third aspect, in a possible implementation, the first communication protocol is the Bluetooth low energy protocol.

With reference to the third aspect, in a possible implementation, the carrier device includes a mobile phone or a wearable device.

According to a fourth aspect, this application provides a vehicle, including a module configured to perform the method according to any one of the second aspect or the possible implementations of the second aspect.

According to a fifth aspect, this application provides a digital key system, including the digital key according to the third aspect and the vehicle according to the fourth aspect.

### BRIEF DESCRIPTION OF DRAWINGS

FIG. 1 is a diagram of an application scenario according to this application;
FIG. 2 is a diagram of a hardware structure of a terminal device according to this application;
FIG. 3 is a diagram of an architecture for implementing a digital key function according to this application;
FIG. 4 is a diagram of another architecture for implementing a digital key function according to this application;
FIG. 5 is a schematic flowchart of providing a digital key function for a vehicle supporting RF according to this application;
FIG. 6 is a schematic flowchart of providing a digital key function for a vehicle supporting RF according to this application; and
FIG. 7 is a schematic flowchart of providing a digital key function for a rolling shutter door supporting RF according to this application.

### DESCRIPTION OF EMBODIMENTS

With continuous development of vehicles, vehicle keys have evolved from physical vehicle keys to current digital keys. A digital key provides a function that enables an intelligent terminal to have a "vehicle key" through a wireless communication technology (the intelligent terminal may be considered as a vehicle key), so that a user can control a vehicle without relying on a physical vehicle key.

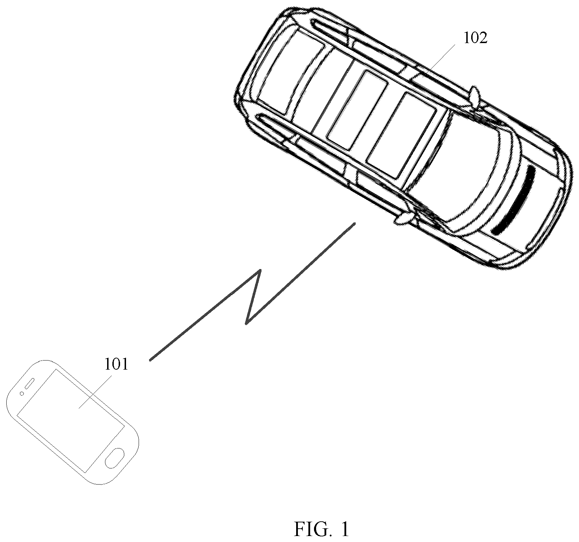

For example, FIG. 1 is a diagram of an application scenario according to an embodiment of this application. As shown in FIG. 1, based on a wireless communication technology, when a user needs to perform an operation on a vehicle 102, for example, needs to unlock or lock the vehicle 102, the user may directly unlock or lock the vehicle 102 by using a terminal device 101 without carrying a physical key.

It should be noted herein that, in this application, an intelligent terminal configured to bear a vehicle key function is also referred to as a carrier device of a digital key, a key carrier device, or a carrier device.

It should be further noted herein that a specific type of the terminal device 101 shown in FIG. 1 is not limited in this embodiment of this application. For example, the terminal device 101 may be a wearable terminal device such as a mobile phone, a tablet computer, a personal computer (personal computer, PC), a smart screen, an artificial intelligence (artificial intelligence, AI) speaker, or a smartwatch.

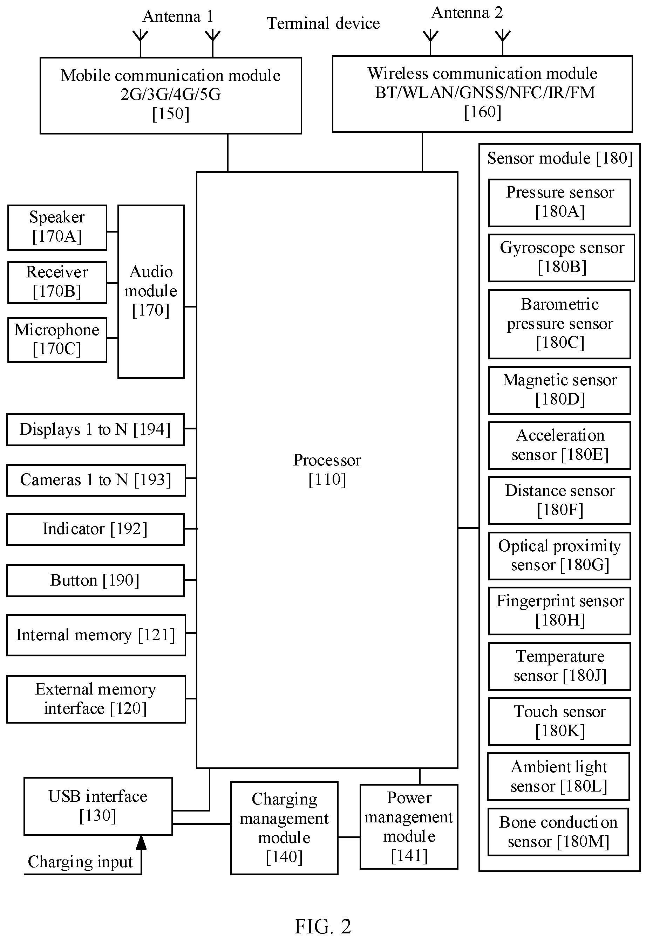

In an example, FIG. 2 is a diagram of a hardware structure of a terminal device according to an embodiment of this application. As shown in FIG. 2, the terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, and a wireless communication module 160, an audio module 170, a speaker 170A, a receiver 170B, a microphone 170C, a sensor module 180, a button 190, an indicator 192, a camera 193, a display 194, and the like.

Optionally, the sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, a structure illustrated in this embodiment of this application does not constitute a specific limitation on the terminal device. In some other embodiments of this application, the terminal device may include more or fewer components than those shown in the figure, or have some components combined, or have some components split, or have a different component arrangement. The components shown in the figure may be implemented by hardware, software, or a combination of software and hardware.

The processor 110 may include one or more processing units. Different processing units may be independent components, or may be integrated into one or more processors. A memory may be further disposed in the processor 110, and is configured to store instructions and data.

The USB interface 130 is an interface that conforms to a USB standard specification, and may be specifically a mini USB interface, a micro USB interface, a USB type-C interface, or the like. The USB interface 130 may be configured to connect to a charger to charge the terminal device, or may be configured to transmit data between the terminal device and a peripheral device, or may be configured to connect to a headset for playing audio through the headset. The interface may be further configured to connect to another terminal device such as an AR device.

The charging management module 140 is configured to receive charging input from a charger. The charger may be a wireless charger or a wired charger. The power management module 141 is configured to connect the charging management module 140 to the processor 110.

A wireless communication function of the terminal device may be implemented through the antenna 1, the antenna 2, the mobile communication module 150, the wireless communication module 160, a modem processor, a baseband processor, or the like.

The antenna 1 and the antenna 2 are configured to transmit and receive an electromagnetic wave signal. An antenna in the terminal device may be configured to cover one or more communication frequency bands. Different antennas may be further reused, to improve antenna utilization.

The mobile communication module 150 may provide a wireless communication solution that includes 2G, 3G, 4G, 5G, or the like and that is applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation.

The wireless communication module 160 may provide a wireless communication solution that is applied to the terminal device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), and the like.

The terminal device implements a display function by using a GPU, the display 194, an application processor, or the like. The GPU is a microprocessor for image processing, and is connected to the display 194 and the application processor. The GPU is configured to: perform mathematical and geometric calculation, and render an image.

The display 194 is configured to display an image, a video, or the like. The display 194 includes a display panel, a backlight, a bias circuit, and a PD. In some embodiments, the terminal device may include one or N displays 194, where N is a positive integer greater than 1.

The terminal device may implement a photographing function by using an ISP, the camera 193, a video codec, the GPU, the display 194, the application processor, and the like.

The camera 193 is configured to capture a static image or a video. In some embodiments, the terminal device may include one or N cameras 193, where N is a positive integer greater than 1.

The external memory interface 120 may be configured to connect to an external memory card, for example, a micro SD card, to extend a storage capability of the terminal device. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area.

The terminal device may implement an audio function, for example, music playing or recording, by using the audio module 170, the speaker 170A, the receiver 170B, the microphone 170C, the application processor, and the like.

The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The terminal device may be used to listen to music or answer a call in a hands-free mode over the speaker 170A. The receiver 170B, also referred to as an "earpiece", is configured to convert an audio electrical signal into a sound signal. When a call is answered or a voice message is received by using the terminal device, the receiver 170B may be put close to the human ear to listen to a voice. The microphone 170C, also referred to as a "mike" or a "mic", is configured to convert a sound signal into an electrical signal.

The pressure sensor 180A is configured to sense a pressure signal, and can convert the pressure signal into an electrical signal. In some embodiments, the pressure sensor 180A may be disposed on the display 194. The gyroscope sensor 180B may be configured to determine a motion posture of the terminal device. The barometric pressure sensor 180C is configured to measure barometric pressure. The magnetic sensor 180D includes a Hall sensor. The acceleration sensor 180E may detect values of accelerations of the terminal device in various directions (usually on three axes). The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch component". The touch sensor 180K may be disposed on the display 194, and the touch sensor 180K and the display 194 constitute a touchscreen, which is also referred to as a "touch screen". The bone conduction sensor 180M may obtain a vibration signal.

The button 190 includes a power button, a volume button, and the like. The button 190 may be a mechanical button, or may be a touch button. The terminal device may receive a button input, and generate a button signal input related to a user setting and function control of the terminal device. The indicator 192 may be an indicator light, and may be configured to indicate a charging status and a power change, or may be configured to indicate a message, a missed call, a notification, and the like.

It should be noted herein that a specific technology and a specific device form used by the electronic device are not limited in embodiments of this application. For example, the electronic device may be a wearable terminal device such as a mobile phone, a tablet computer, a personal computer (personal computer, PC), a smart screen, an artificial intelligence (artificial intelligence, AI) speaker, a head unit device, or a smartwatch. Alternatively, the electronic device may be various teaching auxiliary tools (for example, a learning machine and an early education machine), an intelligent toy, a portable robot, a personal digital assistant (personal digital assistant, PDA), an augmented reality (augmented reality, AR) device, a virtual reality (virtual reality, VR) device, or the like. Alternatively, the device may be a device with a mobile office function, a device with a smart home function, a device with an audio and video entertainment function, a device supporting intelligent travel, or the like.

Specifically, for the application scenario shown in FIG. 1, wireless communication technologies that can be used by the vehicle may include Bluetooth low energy (Bluetooth low energy, BLE), near field communication (near field communication, NFC), ultra-wideband (ultra-wideband, UWB), and low frequency (low frequency, LF)+radio frequency (radio frequency, RF). Different vehicles may use different wireless communication technologies. For example, some vehicles support LF+RF, some vehicles support NFC+BLE, and some vehicles support UWB+BLE.

However, most current intelligent terminals can support only BLE and NFC. As a result, a digital key function can be provided only for a vehicle that uses NFC and/or BLE, but cannot be provided for a vehicle that uses another wireless communication technology. For example, a current digital key cannot provide a digital key function for a vehicle that uses UWB, or cannot provide a digital key function for a vehicle that uses LF+RF. In this case, a user still needs to carry a physical key if a vehicle of the user does not use NFC or BLE.

Therefore, how to provide a digital key function to a vehicle that uses a communication technology other than BLE and NFC, without a need for the user to carry a physical key, has become an urgent technical problem that needs to be resolved.

In view of this, this application provides a vehicle unlocking method and a digital key. When an intelligent terminal that supports only BLE and NFC is used, a digital key function can still be provided for a vehicle that uses another communication technology, without a need for the user to carry a physical key, thereby improving user experience.

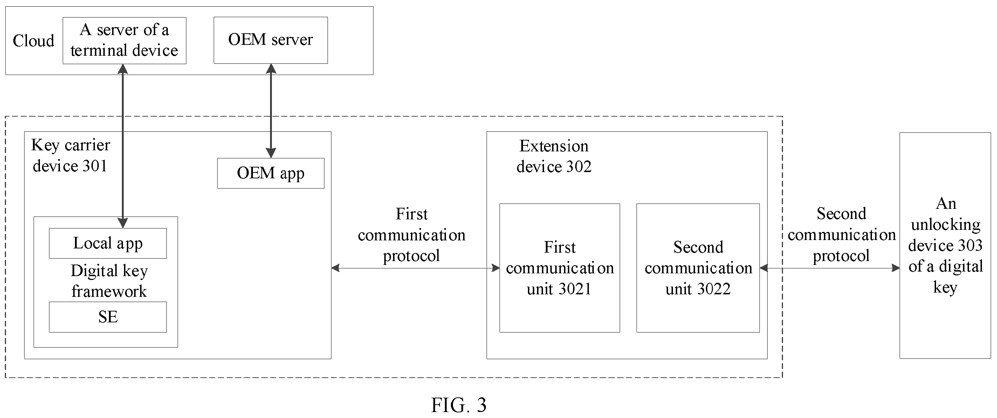

FIG. 3 is a diagram of an architecture for implementing a digital key function according to this application. As shown in FIG. 3, a key carrier device 301 of a digital key, an extension device 302 of the digital key, and an unlocking device 303 of the digital key are included.

Usually, the key carrier device 301 may be a wearable device such as a mobile phone, a watch, or a tablet computer, and may interact with a cloud through an application (application, APP). For example, the key carrier device 301 is a mobile phone. The mobile phone includes an original equipment manufacturer (original equipment manufacturer, OEM) app, and the mobile phone may interact with an OEM server through the OEM app. Alternatively, the mobile phone further includes some local apps, for example, a music app or a communication app. The mobile phone may interact with a mobile phone server on a cloud through the local apps. In addition, the key carrier device 301 in this embodiment usually further includes a digital key framework module. The digital key framework module is mainly configured to generate some information related to a key and provide security protection.

The extension device 302 of the digital key may be, for example, a "mobile phone case", or may be a watch strap.

The unlocking device 303 of the digital key is usually a device that needs to be operated by using a key carrier device, for example, a vehicle or a rolling shutter door.

Specifically, as shown in FIG. 3, in this embodiment, the extension device 302 includes a first communication unit 3021 and a second communication unit 3022.

The first communication unit 3021 in the extension device 302 is configured to communicate with the key carrier device 301 by using a first communication protocol, to implement communication between the key carrier device 301 and the extension device 302.

Generally, because most key carrier devices 301 can support only the BLE protocol and the NFC protocol, in this case, the first communication protocol may be considered as the BLE protocol or the NFC protocol.

The second communication unit 3022 in the extension device 302 is configured to communicate with the unlocking device 303 of the digital key based on a second communication protocol, to implement communication between the extension device 302 and the unlocking device 303 of the digital key. The unlocking device 303 of the digital key supports the second communication protocol.

In other words, the second communication unit 3022 in the extension device 302 and the unlocking device 303 of the digital key support a consistent communication protocol.

For example, if a communication protocol supported by the unlocking device of the digital key is the UWB protocol, the second communication unit 3022 is a module that may communicate with the unlocking device 303 of the digital key by using the UWB protocol. That is, the second communication unit 3022 in the extension device 302 communicates with the unlocking device 303 of the digital key by using the UWB protocol.

For another example, if a communication protocol supported by the unlocking device 303 of the digital key is a radio frequency protocol (which is also referred to as the RF protocol), the second communication unit 3022 is a module that may communicate with the unlocking device 303 of the digital key by using the RF protocol. That is, the second communication unit 3022 in the extension device 302 communicates with the unlocking device 303 of the digital key by using the RF protocol.

In this application, when the extension device 302 of the digital key is used, if the key carrier device 301 that does not support the second communication protocol needs to implement the digital key function for the unlocking device 303 of the digital key that supports the second communication protocol, that is, if the key carrier device 301 that does not support the second communication protocol needs to enable, by using the second communication protocol, a target communication device to perform some operations, the key carrier device 301 may send an operation instruction (which is also referred to as a first instruction) to the extension device 302 based on the first communication protocol. Then, the extension device 302 may receive, by using the first communication unit 3021, the operation instruction sent by the key carrier device 301 based on the first communication protocol, and in response to the operation instruction, communicate with the unlocking device 303 of the digital key based on the second communication protocol by using the second communication unit 3022, to implement a target operation on the unlocking device of the digital key. The unlocking device 303 of the digital key supports the second communication protocol.

For example, the key carrier device 301 communicates with the first communication unit 3021 in the extension device 302 based on the BLE protocol, and the second communication unit 3022 in the extension device 302 communicates with the unlocking device 303 of the digital key based on the UWB protocol. In this case, if the unlocking device of the digital key needs to perform a UWB ranging function by using the digital key function, the key carrier device 301 may send, to the extension device 302 based on the BLE protocol, an instruction for enabling UWB ranging. Correspondingly, the extension device 302 receives, by using the first communication unit 3021, the instruction that is used for enabling UWB ranging and that is sent by the key carrier device 301 based on the BLE protocol, and in response to the instruction that is used for enabling UWB ranging and that complies with the BLE protocol, the extension device 302 performs a UWB interaction operation with the unlocking device of the digital key based on the UWB protocol by using the second communication unit 3022, to implement the UWB ranging function. Further, the unlocking device 303 of the digital key determines, based on a UWB ranging result and an unlocking policy, whether to deliver an unlocking instruction to a door actuator.

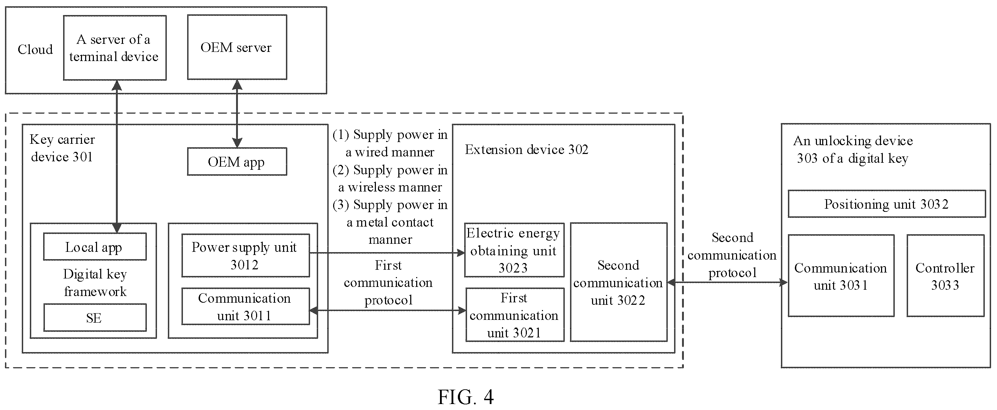

More specifically, as shown in FIG. 4, the key carrier device 301 specifically includes a communication unit 3011 and a power supply unit 3012. The extension device 302 further includes an electric energy obtaining unit 3023. The unlocking device 303 of the digital key includes a communication unit 3031, a positioning unit 3032, and a controller 3033.

The key carrier device 301 implements, by using the communication unit 3011, a communication function with the extension device 302 based on the first communication protocol. In other words, the key carrier device 301 may send a first instruction by using the communication unit 3011.

The unlocking device 303 of the digital key implements, by using the communication unit 3031, a communication function with the extension device 302 based on a second communication protocol. The positioning unit 3032 is configured to position the key carrier device (that is, position a key). The controller 3033 is configured to control the unlocking device 303 of the digital key.

The power supply unit 3012 in the key carrier device 301 is configured to supply power to the electric energy obtaining unit 3023 in the extension device 302 to start the extension device 302.

It should be noted herein that how the power supply unit 3012 in the key carrier device 301 supplies power to the electric energy obtaining unit 3023 in the extension device 302 is not limited in this embodiment.

For example, in an implementation, the power supply unit 3012 in the key carrier device 301 may charge the electric energy obtaining unit 3023 in the extension device 302 in a wired manner (for example, supplying power through a type-C interface).

For example, in another implementation, the power supply unit 3012 in the key carrier device 301 may charge the electric energy obtaining unit 3023 in the extension device 302 in a wireless manner (NFC/QI charging protocol).

For another example, in still another implementation, the power supply unit 3012 in the key carrier device 301 may charge the electric energy obtaining unit 3023 in the extension device 302 in a metal contact manner.

In an optional embodiment, the unlocking device of the digital key supports a wireless communication protocol used for ranging (that is, the second communication protocol is the wireless communication protocol used for ranging), but the key carrier device does not support the wireless communication protocol used for ranging.

For example, a wireless communication protocol used for ranging is the UWB protocol. The unlocking device of the digital key may support the UWB protocol, but the key carrier device does not support the UWB protocol.

In this case, the key carrier device may send, to the extension device, a first instruction that instructs the extension device to perform ranging interaction with the unlocking device of the digital key. Correspondingly, the first communication unit in the extension device receives the first instruction, and in response to the first instruction for performing ranging, completes ranging interaction with the unlocking device of the digital key by using the second communication unit.

In other words, in this embodiment, because the key carrier device does not support the wireless communication protocol used for ranging, the key carrier device cannot implement a ranging function with the unlocking device of the digital key. However, the key carrier device sends, to the extension device, an instruction for enabling the ranging function, so that the extension device completes the ranging function with a vehicle. In this way, a digital key function is provided for the unlocking device of the digital key that supports the wireless communication protocol used for ranging.

Specifically, the following uses an example in which an unlocking device of a digital key is a vehicle, the vehicle supports the UWB protocol and the BLE protocol, and a key carrier device supports the BLE protocol but does not support the UWB protocol, to describe a specific procedure of how the key carrier device provides a digital key function for the vehicle by using an extension device.

In other words, in this embodiment, the BLE protocol may be considered as a first communication protocol, and the UWB protocol may be considered as a second communication protocol.

It should be understood that, in a scenario in which the vehicle supports the UWB protocol and the BLE protocol, and the key carrier device supports the BLE protocol but does not support the UWB protocol, a second communication unit in the extension device is a communication unit that supports the UWB protocol and that can perform UWB ranging interaction with the vehicle.

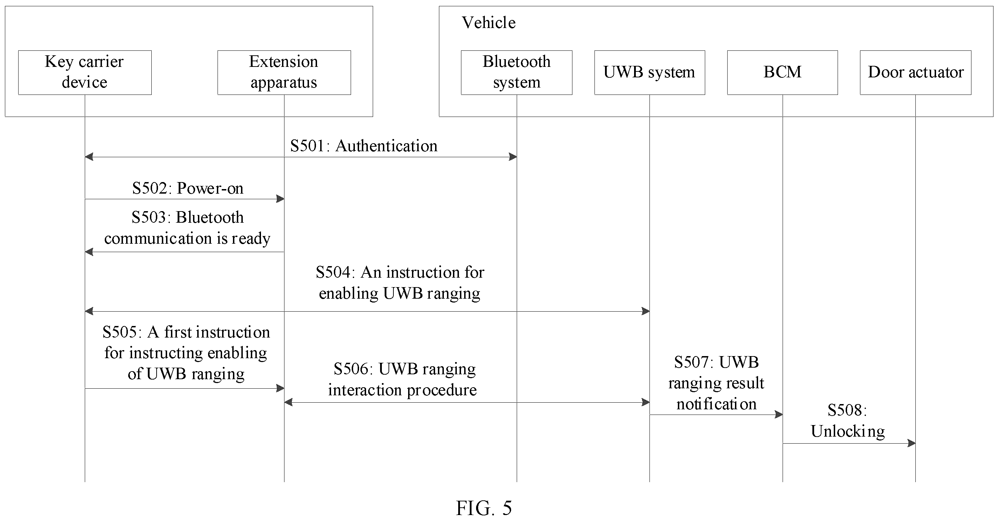

More specifically, as shown in FIG. 5, in this scenario, a specific procedure in which the key carrier device provides the digital key function for the vehicle by using the extension device includes the following steps.

S501: The key carrier device and a Bluetooth system in the vehicle first complete authentication based on a Bluetooth protocol.

For example, when a user approaches the vehicle with the key carrier device, the key carrier device sends, through a Bluetooth channel, an authentication request to the vehicle based on the Bluetooth protocol. After receiving the authentication request, the vehicle performs authentication on the key carrier device. When the authentication succeeds, the Bluetooth system in the vehicle sends authentication result indication information to the key carrier device. The authentication result indication information indicates that the authentication between the vehicle and the key carrier device is completed.

S502: After determining that the authentication between the key carrier device and the vehicle is completed based on the Bluetooth protocol, the key carrier device supplies power to the extension device by using a power supply unit, to start the extension device.

For descriptions of how the power supply unit in the key carrier device supplies power to the extension device, refer to related parts in the foregoing embodiments of this application. Details are not described herein again.

S503: After the extension device is successfully started, the extension device sends first information to the key carrier device, where the first information indicates that a connection is established between the extension device and the key carrier device.

Specifically, in this embodiment, the extension device sends the first information to the key carrier device based on the Bluetooth communication protocol by using a first communication unit. That is, the first information is sent by the extension device to the key carrier device through the Bluetooth channel.

The first information indicates that a connection is established between the extension device and the key carrier device, or may indicate that the extension module is ready to communicate with the key carrier device through Bluetooth, or may indicate that the extension device notifies the key carrier device that Bluetooth communication is ready.

S504: When the vehicle detects that UWB ranging needs to be performed, the vehicle sends, to the key carrier device, an instruction for enabling UWB ranging.

Specifically, the vehicle sends, to the key carrier device based on the Bluetooth protocol, the instruction for enabling UWB ranging. In other words, the vehicle sends, to the key carrier device based on the Bluetooth channel, the instruction for enabling UWB ranging.

S505: After receiving the instruction sent by the vehicle for enabling UWB ranging, the key carrier device sends, to the extension device, a first instruction that instructs the extension device to perform UWB ranging interaction with the vehicle.

Specifically, in this embodiment, the first instruction is sent by the key carrier device to the extension device based on the BLE protocol. In other words, the first instruction that instructs the extension device of the digital key to enable UWB ranging is sent by the key carrier device to the extension device through the Bluetooth channel.

S506: After receiving the first instruction that instructs the extension device to perform UWB ranging interaction with the vehicle, in response to the first instruction, the extension device performs a UWB ranging interaction procedure with a UWB system in the vehicle based on the UWB protocol.

Specifically, in this embodiment, the second communication unit in the extension device performs the UWB ranging interaction procedure with the UWB system in the vehicle based on the UWB protocol.

Optionally, the specific procedure may further include the following steps.

S507: The UWB system in the vehicle notifies a BCM of a ranging result, and the BCM determines, based on an unlocking policy, whether to deliver an unlocking instruction to a door actuator.

For example, when the BCM determines, based on the unlocking policy, to deliver the unlocking instruction to the door actuator, S508 is performed: Unlock a vehicle door.

In this embodiment, because the key carrier device does not support the wireless communication protocol used for UWB ranging, the key carrier device cannot implement a UWB ranging function with the vehicle. However, the key carrier device sends, to the extension device, an instruction for enabling the UWB ranging function, to implement the UWB ranging function with the vehicle by using the extension device. In this way, the digital key function can also be provided for the vehicle that supports the wireless communication protocol used for UWB ranging.

In an optional embodiment, in some scenarios (for example, a scenario in which a second communication protocol supported by the unlocking device of the digital key is a radio frequency protocol, but the key carrier device does not support the radio frequency protocol), the key carrier device may further send a remote control instruction (the remote control instruction may be considered as the first instruction) of the unlocking device of the digital key to the extension device, and the first instruction carries key information of the unlocking device of the digital key. Correspondingly, the extension device receives the first instruction by using the first communication unit, and in response to the first instruction, sends the first instruction to the unlocking device of the digital key based on the second communication protocol by using the second communication unit.

That is, in this embodiment, because the key carrier device does not support the radio frequency protocol, the key carrier device cannot directly provide a digital key function to the unlocking device of the digital key. However, the key carrier device sends the remote control instruction to the extension device, so that the extension device sends the remote control instruction to the vehicle based on the radio frequency protocol. In this way, the digital key function is provided for the unlocking device of the digital key that supports the radio frequency protocol.

Specifically, the following uses an example in which an unlocking device of a digital key is a vehicle, the vehicle supports an RF protocol, and a key carrier device supports the BLE protocol, to describe a specific procedure of how the key carrier device provides a digital key function for the vehicle by using an extension device.

In other words, in this embodiment, the BLE protocol may be considered as a first communication protocol, and the RF protocol may be considered as a second communication protocol.

It should be understood that, in a scenario in which the vehicle supports the RF protocol, and the key carrier device supports the BLE protocol but does not support the RF protocol, a second communication unit in the extension device is a communication unit that supports the RF protocol.

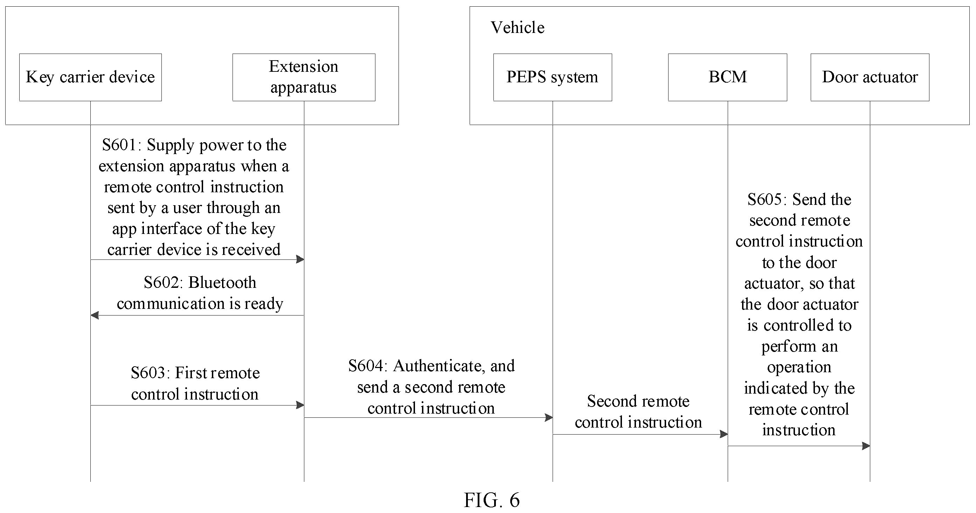

More specifically, as shown in FIG. 6, in this scenario, a specific procedure in which the key carrier device provides the digital key function for the vehicle by using the extension device includes the following steps.

S601: When a remote control instruction sent by a user through an app interface of a key carrier (a mobile phone or a watch) is received, the extension device is powered by a power supply unit to start the extension device.

For example, the remote control instruction is an instruction used for unlocking a vehicle.

For another example, the remote control instruction is an instruction used for locking a vehicle.

S602: After the extension device is successfully started, the extension device sends first information to the key carrier device, where the first information indicates that a connection is established between the extension device and the key carrier device.

For this step, refer to the descriptions in S503 in the embodiment shown in FIG. 5. Details are not described herein again.

S603: After receiving the first information, in response to the first information, the key carrier device sends a first remote control instruction to the extension device, and the remote control instruction carries key information.

Specifically, in this step, after receiving the first information used to notify the key carrier device that Bluetooth communication is ready, the key carrier device sends the first remote control instruction to the extension device through a Bluetooth channel between the key carrier device and the extension device. In addition, the first remote control instruction carries the key information of the vehicle.

S604: After receiving the first remote control instruction, the extension device completes authentication with a PEPS system in the vehicle in response to the first remote control instruction, and sends a second remote control instruction to the vehicle. The second remote control instruction is a remote control instruction that complies with the radio frequency protocol and that is converted from the first remote control instruction.

Specifically, the extension device receives the first remote control instruction by using a first communication unit, converts the first remote control instruction into the second remote control instruction that complies with the radio frequency protocol, and finally sends the second remote control instruction to the vehicle by using the second communication unit.

S605: After receiving the second remote control instruction, a BCM in the vehicle sends the second remote control instruction to a door actuator, so that the door actuator performs an operation indicated by the remote control instruction.

For example, when the remote control instruction is an instruction used for unlocking the vehicle, the vehicle is unlocked; or when the remote control instruction is an instruction used for locking the vehicle, the vehicle is locked.

In this embodiment, because the key carrier device does not support the RF protocol, the key carrier device cannot implement the digital key function for the vehicle that supports the RF. However, the key carrier device sends the remote control instruction to the extension device, to convert the remote control instruction into the remote control instruction that complies with the RF protocol and send the remote control instruction to the vehicle by using the extension device. In this way, the digital key function is also provided for the vehicle that supports the RF protocol.

The foregoing embodiments use a vehicle as an example to describe how to provide a digital key function for the vehicle. The following using an example in which an unlocking device of a digital key is a rolling shutter door, to describe a specific procedure of how a key carrier device provides a digital key function to the rolling shutter door by using an extension device.

Generally, a communication protocol used in the rolling shutter door is an RF protocol.

Therefore, in this embodiment, the BLE protocol is still used as a first communication protocol, and the RF protocol is still used as a second communication protocol to describe this embodiment of how to provide the digital key function to the rolling shutter door.

It should be understood that, in a scenario in which the rolling shutter door supports the RF protocol, and the key carrier device supports the BLE protocol but does not support the RF protocol, a second communication unit in the extension device is a communication unit that supports the RF protocol.

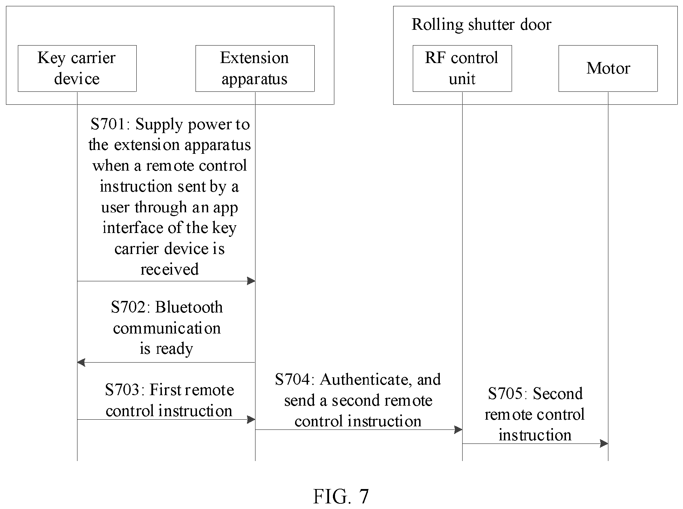

More specifically, as shown in FIG. 7, in this scenario, a specific procedure in which the key carrier device provides the digital key function for the rolling shutter door by using the extension device includes the following steps.

S701: When a remote control instruction sent by a user through an app interface of a key carrier (a mobile phone or a watch) is received, the extension device is powered by a power supply unit to start the extension device.

For example, the remote control instruction is an instruction used for opening a rolling shutter door.

For another example, the remote control instruction is an instruction used for closing a rolling shutter door.

S702: After the extension device is successfully started, the extension device sends first information to the key carrier device, where the first information indicates that a connection is established between the extension device and the key carrier device.

S703: After receiving the first information, in response to the first information, the key carrier device sends a first remote control instruction to the extension device, and the remote control instruction carries key information.

S704: After receiving the first remote control instruction, the extension device completes authentication with an RF control unit in the rolling shutter door in response to the first remote control instruction, and sends a second remote control instruction to the rolling shutter door. The second remote control instruction is a remote control instruction that complies with the radio frequency protocol and that is converted from the first remote control instruction.

S705: After receiving the second remote control instruction, the RF control unit in the rolling shutter door sends the second remote control instruction to a motor, so that the motor performs an operation indicated by the remote control instruction.

For example, when the remote control instruction is an instruction used for opening the rolling shutter door, the motor rotates forward to open the rolling shutter door; or when the remote control instruction is an instruction used for closing the rolling shutter door, the motor rotates backward to close the rolling shutter door.

In this embodiment, because the key carrier device does not support the RF protocol, the key carrier device cannot implement the digital key function for the rolling shutter door that supports the RF. However, the key carrier device sends the remote control instruction to the extension device, to convert the remote control instruction into the remote control instruction that complies with the RF protocol and send the remote control instruction to the rolling shutter door by using the extension device. In this way, the digital key function is also provided for the rolling shutter door that supports the RF protocol.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, such as a server or a data center integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods to implement the described functions for each particular application, but it should not be considered that this implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle unlocking method, applied to a digital key, wherein the method comprises:
receiving, by an extension device of the digital key, a first instruction from a carrier device of the digital key based on a first communication protocol; and
communicating, by the extension device, with a vehicle based on a second communication protocol in response to the first instruction.

2. The method according to claim 1, wherein the second communication protocol is a wireless communication protocol used for ranging.

3. The method according to claim 2, wherein the first instruction instructs the extension device to perform ranging interaction with the vehicle, wherein
the communicating, by the extension device, with a vehicle based on a second communication protocol in response to the first instruction comprises:
performing, by the extension device, ranging interaction with the vehicle based on the second communication protocol in response to the first instruction.

4. The method according to claim 2 or 3, wherein the second communication protocol is the ultra-wideband UWB protocol.

5. The method according to claim 1, wherein the first instruction is a remote control instruction of the vehicle, and the first instruction carries key information of the vehicle, wherein
the communicating, by the extension device, with the vehicle based on a second communication protocol in response to the first instruction comprises:
sending, by the extension device, the first instruction to the vehicle based on the second communication protocol in response to the first instruction.

6. The method according to claim 5, wherein the second communication protocol is a radio frequency protocol.

7. The method according to any one of claims 1 to 6, wherein the method further comprises:
sending, by the extension device, first information to the carrier device based on the first communication protocol before receiving the first instruction, wherein the first information indicates that a connection is established between the extension device and the carrier device.

8. The method according to any one of claims 1 to 7, wherein the method further comprises:
obtaining, by the extension device, electric energy from the carrier device; and
starting, by the extension device, the extension device based on the electric energy.

9. The method according to any one of claims 1 to 8, wherein the obtaining, by the extension device, electric energy from the carrier device comprises:
obtaining, by the extension device, the electric energy from the carrier device in at least one of the following manners: a wired manner, a wireless manner, and a metal contact manner.

10. The method according to any one of claims 1 to 9, wherein the first communication protocol is the Bluetooth low energy protocol.

11. The method according to any one of claims 1 to 10, wherein the carrier device comprises a mobile phone or a wearable device.

12. A vehicle unlocking method, applied to a vehicle, comprising:
communicating with an extension device of a digital key based on a second communication protocol, wherein the extension device receives a first instruction from a carrier device of the digital key based on a first communication protocol, and communicates with the vehicle based on the second communication protocol in response to the first instruction.

13. The method according to claim 12, wherein the second communication protocol is a wireless communication protocol used for ranging.

14. The method according to claim 13, wherein the first instruction instructs the extension device to perform ranging interaction with the vehicle, wherein
the communicating with an extension device based on a second communication protocol comprises:
performing ranging interaction with the extension device based on the second communication protocol.

15. The method according to claim 13 or 14, wherein the second communication protocol is the ultra-wideband UWB protocol.

16. The method according to claim 12, wherein the first instruction is a remote control instruction of the vehicle, and the first instruction carries key information of the vehicle, wherein
the communicating with an extension device based on a second communication protocol comprises:
receiving, by the vehicle based on the second communication protocol, the first instruction sent by the extension device; and
performing an operation indicated by the first instruction.

17. The method according to claim 16, wherein the second communication protocol is a radio frequency protocol.

18. A digital key, comprising an extension device and a carrier device of the digital key, wherein the extension device comprises a first communication unit and a second communication unit;
the first communication unit is configured to receive a first instruction from the carrier device of the digital key based on a first communication protocol; and
the second communication unit is configured to communicate with a vehicle based on a second communication protocol in response to the first instruction.

19. The digital key according to claim 18, wherein the second communication protocol is a wireless communication protocol used for ranging.

20. The digital key according to claim 19, wherein the first instruction instructs the extension device to perform ranging interaction with the vehicle; and
the second communication unit is specifically configured to perform ranging interaction with the vehicle based on the second communication protocol in response to the first instruction.

21. The digital key according to claim 19 or 20, wherein the second communication protocol is the ultra-wideband UWB protocol.

22. The digital key according to claim 18, wherein the first instruction is a remote control instruction of the vehicle, and the first instruction carries key information of the vehicle; and
the second communication unit is specifically configured to send the first instruction to the vehicle based on the second communication protocol in response to the first instruction.

23. The digital key according to claim 22, wherein the second communication protocol is a radio frequency protocol.

24. The digital key according to any one of claims 18 to 23, wherein the first communication unit is further configured to send first information to the carrier device based on the first communication protocol before receiving the first instruction, wherein the first information indicates that a connection is established between the extension device and the carrier device.

25. The digital key according to any one of claims 18 to 24, wherein the extension device further comprises an electric energy obtaining unit, and the electric energy obtaining unit is configured to obtain electric energy from the carrier device to start the extension device.

26. The digital key according to any one of claims 18 to 25, wherein the electric energy obtaining unit specifically obtains the electric energy from the carrier device in at least one of the following manners: a wired manner, a wireless manner, and a metal contact manner.

27. The digital key according to any one of claims 18 to 26, wherein the first communication protocol is the Bluetooth low energy protocol.

28. The digital key according to any one of claims 18 to 27, wherein the carrier device comprises a mobile phone or a wearable device.

29. A vehicle, comprising a module configured to implement the method according to any one of claims 12 to 17.

30. A digital key system, comprising the digital key according to any one of claims 18 to 28 and the vehicle according to claim 29.
